# EUROPEAN PATENT SPECIFICATION

(11) **EP 3 309 222 B1**
(45) Date of publication and mention of the grant of the patent: **26.02.2020**
(21) Application number: 16848912.8
(22) Date of filing: 21.09.2016
(51) Int. Cl.: C09D 5/00, C09D 4/00, G02B 1/11, C08J 7/04

(54) **PHOTOCURABLE COATING COMPOSITION, LOW-REFRACTION LAYER, AND ANTI-REFLECTION FILM**
LICHTHÄRTBARE BESCHICHTUNGSZUSAMMENSETZUNG, SCHICHT MIT GERINGER BRECHUNG UND ANTIREFLEXFOLIE
COMPOSITION DE REVÊTEMENT PHOTODURCISSABLE, COUCHE BASSE RÉFRACTION, ET FILM ANTIREFLET

(30) Priority: 24.09.2015 KR 20150135730; 20.09.2016 KR 20160120100
(43) Date of publication of application: 18.04.2018
(73) Proprietor: LG Chem, Ltd., Seoul 07336 (KR)
(72) Inventor: KIM, Boo Kyung, Daejeon 34122 (KR); JANG, Seok Hoon, Daejeon 34122 (KR); BYUN, Jin Seok, Daejeon 34122 (KR); CHANG, Yeong Rae, Daejeon 34122 (KR); KIM, Heon, Daejeon 34122 (KR)
(74) Representative: Goddar, Heinz J.
(86) International application number: PCT/KR2016/010525
(87) International publication number: WO 2017/052186

(56) References cited:
- JP-A- 2014 108 983
- KR-A- 20090 021 166
- KR-A- 20130 118 069
- KR-A- 20140 076 787
- KR-A- 20140 140 139
- US-A1- 2002 042 020
- US-A1- 2006 188 664
- US-A1- 2007 048 457
- US-A1- 2007 254 087
- US-A1- 2008 131 674

## Description

The present invention relates to a photocurable coating composition, a low refractive layer, and an anti-reflective film. More specifically, the present invention relates to a photocurable coating composition capable of providing a low refractive layer that has low reflectance and high light transmittance, and can simultaneously realize high scratch resistance and a high anti-pollution property, and an anti-reflective film that can increase screen sharpness of a display device and yet exhibits excellent mechanical properties.

### [BACKGROUND OF THE INVENTION]

In general, in flat panel display devices such as a PDP, an LCD, etc., an anti-reflective film is installed so as to minimize reflection of incident light from the outside.

Methods for minimizing the reflection of light include a method of using a dispersing filler such as inorganic fine particles, etc. in a resin, coating it on a substrate film, and forming unevenness (anti-glare: AG coating), a method of using light interference by forming multiple layers having different refractive indexes on a substrate film (anti-reflective: AR coating), a method of using them together, etc.

Among them, in the case of AG coating, although the absolute amount of reflected light is equivalent to common hard coatings, a low reflection effect can be obtained by reducing the amount of light entering the eyes using light scattering through unevenness. However, since the AG coating lowers screen sharpness due to the surface unevenness, recently, many studies have progressed on the AR coating.

US 2008/131674A1 relates to an optical film comprising a transparent support and a hardcoat layer that is a layer formed by curing a coating solution, the coating solution comprising an octa- to pentadeca-functional urethane (meth)acrylate-based compound having a molecular weight of 800 to 2000 and having two or more urethane bonds in its molecule and a photopolymerization initiator.

US 2007/254087A1 relates to an oil-in-water type emulsion coating composition having an aqueous phase and an oil phase, the oil-in-water type emulsion coating composition comprising an active energy ray-curable polyfunctional (meth)acrylate having three or more (meth)acryloyl groups within a molecule and an organic solvent. In the oil phase, the organic solvent is having a solubility of 30 g or less in 100 g of water and having a property capable of swelling or dissolving a substrate.

US2007/048457A1 relates to a method for producing a film having a coated layer, comprising coating a coating solution on a support to provide a coating layer, the coating solution comprising a light-transmitting resin and a solvent, first drying the coating layer in a first drying zone where a maximum wind speed on a surface of the coating layer is 1 m/sec or more and second drying the coating layer in a second drying zone having a temperature of 50° C. or more higher than that of the first drying zone to form a coated layer.

JP2014108983A relates to photocurable resin composition containing a specific fluorene-based compound as component (A), monofunctional (meth)acrylate having an alicyclic hydrocarbon group as component (B), monofunctional (meth)acrylate having one or more aromatic ring as component (C) and a photo-radical polymerization initiator as component (D), and the content of the component (A) is 10 to 70 pts.mass, the content of the component (B) is 5 to 65 pts.mass and the content of the component (C) is 5 to 65 pts.mass, in total 100 pts.mass of (A) to (C) components.

US 2006/188664A1 relates to a coating composition for the formation of a low refractive index layer comprising a fluorine-containing olefin-based polymer that has a polysiloxane segment in its main chain, has a fluorine content of 30 mass% or more and contains a plurality of ethylenically unsaturated groups and a hollow silica fine particle having an average particle diameter of 5 to 200 nm and a refractive index of 1.17 to 1.40.

As a film using the AR coating, those having a multi-layered structure in which a hard coating layer (high refractive index layer), a low refractive coating layer, etc. are stacked on a substrate film are being commercialized. However, since the method of forming multiple layers separately conducts the processes of forming each layer, it has a disadvantage in terms of lowered scratch resistance due to weak interlayer adhesion (interface adhesion). Accordingly, in order to reduce the absolute reflection amount of incident light from the outside and improve scratch resistance of the surface, many studies are being progressed, but the resulting property improvement degree is unsatisfactory.

### [DISCLOSURE OF INVENTION]

### [TECHNICAL PROBLEM]

It is an object of the present invention to provide a photocurable coating composition capable of providing a low refractive layer that has low reflectance and high light transmittance, and that can simultaneously realize high scratch resistance and a high anti-pollution property.

It is another object of the present invention to provide a low refractive layer that has low reflectance and high light transmittance, and that can simultaneously realize high scratch resistance and a high anti-pollution property.

It is still another object of the present invention to provide an anti-reflective film that can increase screen sharpness of a display device and yet exhibits excellent mechanical properties.

### [TECHNICAL SOLUTION TO PROBLEM]

A photocurable coating composition for forming a low refractive layer, comprising: a photopolymerizable compound; inorganic fine particles; two or more kinds of fluorine-containing compounds comprising photoreactive functional groups; and a photopolymerization initiator, wherein the two or more kinds of fluorine-containing compounds comprising photoreactive functional groups have different fluorine contents according to the kind, wherein the two or more kinds of fluorine-containing compounds comprising photoreactive functional groups comprise a first fluorine-containing compound comprising a photoreactive functional group and comprising 25 to 60 wt% of fluorine, and a second fluorine-containing compound comprising a photoreactive functional group and comprising fluorine in the content of 1 wt% or more and less than 25 wt%, wherein a fluorine-containing compound means a compound including at least one fluorine atom in the compound, is provided herein.

A low refractive layer comprising the photocured product of the photocurable coating composition, is also provided herein.

An anti-reflective film comprising the low refractive layer and a hard coating layer formed on one side of the low refractive layer,, is also provided herein.

Hereinafter, a photocurable coating composition, a low refractive layer, and an anti-reflective film according to specific embodiments of the present invention will be explained in detail.

As used herein, a photopolymerizable compound commonly designates a compound that causes a polymerization reaction if light, for example, visible rays or ultraviolet rays, is irradiated thereto.

Herein, a fluorine-containing compound means a compound including at least one fluorine atom in the compound.

Herein, (meth)acryl includes both an acryl and a methacryl.

Herein, (co)polymer includes both a copolymer and a homopolymer.

Herein, silica hollow particles mean silica particles derived from a silicon compound or an organosilicon compound, wherein an empty space exists on the surface and/or inside of the silica particles.

According to one embodiment of the present invention a photocurable coating composition for forming a low refractive layer, comprising: a photopolymerizable compound; inorganic fine particles; two or more kinds of fluorine-containing compounds comprising photoreactive functional groups; and a photopolymerization initiator, wherein the two or more kinds of fluorine-containing compounds comprising photoreactive functional groups have different fluorine contents according to the kind, wherein the two or more kinds of fluorine-containing compounds comprising photoreactive functional groups comprise a first fluorine-containing compound comprising a photoreactive functional group and comprising 25 to 60 wt% of fluorine, and a second fluorine-containing compound comprising a photoreactive functional group and comprising fluorine in the content of 1 wt% or more and less than 25 wt%, wherein a fluorine-containing compound means a compound including at least one fluorine atom in the compound. , is provided.

The present inventors confirmed through experiments that by using a photocurable coating composition including two or more kinds of fluorine-containing compounds including photoreactive functional groups, a low refractive layer that can realize low reflectance and high light transmittance, can improve abrasion resistance or scratch resistance, and can simultaneously secure an excellent anti-pollution property, and an anti-reflective film including the same, may be provided, and completed the present invention.

A low refractive layer prepared from the photocurable coating composition of the above embodiment can increase sharpness of the screen of a display device, and yet has excellent scratch resistance and a high anti-pollution property, and thus can be easily applied for the manufacturing processes of display devices or polarization plates without significant limitations.

Previously, in order to improve scratch resistance of a low refractive layer included in an anti-reflective film, a method of adding various particles of a nanometer size (for example silica, alumina, zeolite, etc.) was mainly attempted. However, when nanometer-sized particles are used, it is difficult to increase scratch resistance while lowering the reflectance of a low refractive layer, and due to the nanometer sized particles, the anti-pollution property of the surface of the low refractive layer is significantly deteriorated.

To the contrary, since the photocurable coating composition of the above embodiment includes two or more kinds of fluorine-containing compounds including photoreactive functional groups, the finally prepared low refractive layer and anti-reflective film may have lower reflectance and improved light transmittance, and can improve mechanical properties such as scratch resistance, etc., and can simultaneously secure a high anti-pollution property against external pollutants.

Specifically, due to the properties of the fluorine atom included in the fluorine-containing compound including a photoreactive functional group, the interaction energy of the low refractive layer and anti-reflective film prepared from the photocurable coating composition with liquids or organic materials may be lowered, and thus the amount of pollutant transcribed to the low refractive layer and anti-reflective film can be significantly reduced, the transcribed pollutant can be prevented from remaining on the surface, and the pollutant itself can be easily removed.

Further, in the process of forming the low refractive layer and anti-reflective film, the reactive functional groups included in the fluorine-containing compounds including photoreactive functional groups act as crosslinkers, thereby increasing physical durability, scratch resistance, and thermal stability of the low refractive layer and anti-reflective film.

Particularly, by using two or more kinds of the fluorine-containing compounds including photoreactive functional groups, a higher synergistic effect can be obtained compared to the case of using one kind of fluorine-containing compound including a photoreactive functional group, and specifically, more improved surface properties such as anti-pollution and slip properties, etc. can be realized while securing higher physical durability and scratch resistance.

The two or more kinds of fluorine-containing compounds including photoreactive functional groups are classified according to the fluorine content range, and specifically, the two or more kinds of fluorine-containing compounds including photoreactive functional groups have different fluorine content ranges according the kind.

Due to the properties arising from the fluorine-containing compound having a higher fluorine content among the two or more kinds of fluorine-containing compounds including photoreactive functional groups, the low refractive layer and anti-reflective film prepared from the photocurable coating composition may have a more improved anti-pollution property while securing lower reflectance. In addition, the fluorine-containing compound having a lower fluorine content among the two or more kinds of fluorine-containing compounds including photoreactive functional groups may further increase compatibility with other components included in the photocurable coating composition, and furthermore, allows the finally manufactured low refractive layer and anti-reflective film to have higher physical durability and scratch resistance and to have a homogeneous surface property and a high surface slip property as well as an improved anti-pollution property.

More specifically, the two or more kinds of fluorine-containing compounds including photoreactive functional groups are divided on the basis of the fluorine content of 25 wt%. The content of fluorine included in each fluorine-containing compound including a photoreactive functional group can be confirmed through commonly known analysis methods, for example, IC [Ion Chromatograph] analysis.

The two or more kinds of fluorine-containing compounds including photoreactive functional groups include a first fluorine-containing compound including a photoreactive functional group and including 25 to 60 wt% of fluorine.

The two or more kinds of fluorine-containing compounds including photoreactive functional groups include a second fluorine-containing compound including a photoreactive functional group and including fluorine in the content of 1 wt% or more and less than 25 wt%.

As the photocurable coating composition includes 1) a first fluorine-containing compound including a photoreactive functional group and including 25 to 60 wt% of fluorine, and 2) a second fluorine compound including a photoreactive functional group and including fluorine in the content of 1 wt% or more and less than 25 wt%, more improved surface properties such as anti-pollution property and slip property, etc. can be realized while securing higher physical durability and scratch resistance, compared to the case of using one kind of fluorine-containing compound including a photoreactive functional group.

Specifically, due to the first fluorine-containing compound having a higher fluorine content, the finally manufactured low refractive layer and anti-reflective film may have a more improved anti-pollution property while securing lower reflectance, and due to the second fluorine-containing compound having a lower fluorine content, compatibility with other components included in the photocurable coating composition can be increased, and the finally manufactured low refractive layer and anti-reflective film may have higher physical durability and scratch resistance, and have a homogeneous surface property and a high slip property as well as an improved anti-pollution property.

The fluorine content difference between the first fluorine-containing compound and the second fluorine-containing compound may be 5 wt% or more. When the fluorine content difference between the first fluorine-containing compound and the second fluorine-containing compound is 5 wt% or more, or 10 wt% or more, the effect resulting from each of the first fluorine-containing compound and the second fluorine-containing compound may be further maximized, and thus the synergistic effect resulting from the use of the first fluorine-containing compound and the second fluorine-containing compound together may increase.

The terms first and second are intended to specify constructional elements referred to, and the order or importance, etc. are not limited thereby.

Although the weight ratio of the first fluorine-containing compound and the second fluorine-containing compound is not specifically limited, the weight ratio of the second fluorine-containing compound to the first fluorine-containing compound may be 0.01 to 0.5, and preferably 0.01 to 0.4, so that the finally manufactured low refractive layer and anti-reflective film may have a homogeneous surface property as well as more improved scratch resistance and anti-pollution property.

In each of the two or more kinds of fluorine-containing compounds including photoreactive functional groups, one or more photoreactive functional groups may be included or substituted, and the photoreactive functional group means a functional group capable of participating in a polymerization reaction by the irradiation of light, for example, irradiation of visible light or UV. The photoreactive functional group may include various functional groups known to be capable of participating in a polymerization reaction by the irradiation of light, and specific examples thereof may include a (meth)acrylate group, an epoxide group, a vinyl group, or a thiol group.

The two or more kinds of fluorine-containing compounds including photoreactive functional groups may respectively have a weight average molecular weight (in terms of polystyrene measured by GPC) of 2000 to 200,000, and preferably 5000 to 100,000.

If the weight average molecular weight of the fluorine-containing compounds including photoreactive functional groups is too small, in the photocurable coating composition of the above embodiment, the fluorine-containing compounds may not be uniformly and effectively arranged on the surface and may be positioned inside, and thus the anti-pollution property of the low refractive layer and anti-reflective film may be deteriorated and the crosslinking density inside of the low refractive layer and anti-reflective film may be lowered, thus deteriorating mechanical properties such as total strength or scratch resistance, etc.

Further, if the weight average molecular weight of the fluorine-containing compounds including photoreactive functional groups is too high, compatibility with other components in the photocurable coating composition of the above embodiment may be decreased, and the haze of the finally manufactured low refractive layer and anti-reflective film may increase or the light transmittance may be lowered, and the strength of the low refractive layer and anti-reflective film may also be deteriorated.

Specifically, the fluorine-containing compounds including photoreactive functional groups may include one or more selected from the group consisting of: i) aliphatic compounds or alicyclic compounds substituted with one or more photoreactive functional groups, in which at least one carbon is substituted with one or more fluorine atoms; ii) heteroaliphatic compounds or heteroalicyclic compounds substituted with one or more photoreactive functional groups, in which at least one hydrogen is substituted with fluorine, and at least one carbon is substituted with silicon; iii) a polydialkyl siloxane-based polymer (for example, a polydimethyl siloxane-based polymer) substituted with one or more photoreactive functional groups, in which at least one silicon is substituted with one or more fluorine atoms; iv) polyether compounds substituted by one or more photoreactive functional groups, in which at least one hydrogen is substituted with fluorine; and mixtures or copolymers of two or more of i) to iv).

The photocurable coating composition may include, based on 100 parts by weight of the photopolymerizable compound, 20 to 300 parts by weight of the two or more kinds of fluorine-containing compounds including photoreactive functional groups. The content of the two or more kinds of fluorine-containing compounds including photoreactive functional groups in the photopolymerizable compound is based on the total content of the two or more kinds of fluorine-containing compounds including photoreactive functional groups.

If the two or more kinds of fluorine-containing compounds including photoreactive functional groups are excessively added compared to the photopolymerizable compound, the coatability of the photocurable coating composition of the above embodiment may be deteriorated, or the low refractive layer obtained from the photocurable coating composition of the above embodiment may not have sufficient durability or scratch resistance. In addition, if the content of the two or more kinds of fluorine-containing compounds including photoreactive functional groups is too small compared to the photopolymerizable compound, the low refractive layer obtained from the photocurable coating composition of the above embodiment may not have sufficient mechanical properties such as anti-pollution property or scratch resistance, etc.

The fluorine-containing compound including a photoreactive functional group may further include silicon or a silicon-containing compound. That is, the fluorine-containing compound including a photoreactive functional group may optionally contain silicon or a silicon-containing compound inside, and specifically, the content of silicon in the fluorine-containing compound including a photoreactive functional group may be 0.1 wt% to 20 wt%.

The content of silicon or a silicon-containing compound respectively included in the fluorine-containing compound including a photoreactive functional group can be confirmed through commonly known analysis methods, for example ICP [Inductively Coupled Plasma] analysis.

The silicon included in the fluorine-containing compound including a photoreactive functional group may increase compatibility with other components included in the photocurable coating composition, and thus may prevent the generation of haze in the finally prepared low refractive layer, thereby increasing transparency, and furthermore, may improve the slip property of the surface of the finally prepared low refractive layer or anti-reflective film, thereby increasing scratch resistance.

Meanwhile, if the content of silicon in the fluorine-containing compound including a photoreactive functional group becomes too high, compatibility between other components included in the photocurable coating composition of the above embodiment and the fluorine-containing compounds may be deteriorated, and thus the finally prepared low refractive layer or anti-reflective film may not have sufficient light transmittance or anti-reflective performance and the anti-pollution property of the surface may be deteriorated.

The photocurable coating composition may further include polysilsesquioxane substituted with one or more reactive functional groups. The polysilsesquioxane substituted with one or more reactive functional groups has reactive functional groups on the surface, and thus may increase mechanical properties, for example, scratch resistance of the binder resin or coating formed by photocuring of the photocurable coating composition.

When previously known fine particles such as silica, alumina, zeolite, etc. are used, only the strength of a film or coating is increased, while when the polysilsesquioxane substituted with one or more reactive functional groups is used, not only the strength of the finally prepared low refractive layer or anti-reflective film may be increased, but also cross-links may be formed throughout the whole area of the film, thus improving surface strength and scratch resistance together.

The photocurable coating composition may include, based on 100 parts by weight of the photopolymerizable compound, 0.5 to 60 parts by weight, or 1.5 to 45 parts by weight, of the polysilsesquioxane substituted with one or more reactive functional groups.

If the content of the polysilsesquioxane substituted with one or more reactive functional groups is too low compared to the photopolymerizable compound in the photocurable coating composition, it may be difficult to sufficiently secure scratch resistance of the binder resin or coating formed by photocuring of the photocurable coating composition. Further, if the content of the polysilsesquioxane substituted with one or more reactive functional groups is too low compared to the photopolymerizable compound in the photocurable coating composition, transparency of the low refractive layer or anti-reflective film prepared from the photocurable coating composition may be deteriorated, and scratch resistance may be deteriorated.

The reactive functional group substituted in the polysilsesquioxane may include one or more functional groups selected from the group consisting of alcohol, amine, carboxylic acid, epoxide, imide, (meth)acrylate, nitrile, norbornene, olefin [allyl, cycloalkenyl, or vinyldimethylsilyl, etc.], polyethylene glycol, thiol, and vinyl groups, and preferably, may be epoxide or (meth)acrylate.

More specific examples of the reactive functional group may include (meth)acrylates, C1-20 alkyl (meth)acrylates, C3-20 cycloalkyl epoxides, and C1-10 alkyl cycloalkane epoxides.

The alkyl (meth)acrylate means that another part of the 'alkyl' that is not bonded to (meth)acrylate is a bonding site, the cycloalkyl epoxide means that another part of the 'cycloalkyl' that is not bonded to epoxide is a bonding site, and the alkyl cycloalkane epoxide means that another part of the 'alkyl' that is not bonded to cycloalkane epoxide is a bonding site.

Meanwhile, the polysilsesquioxane substituted with one or more reactive functional groups may further include one or more unreactive functional groups selected from the group consisting of a C1-20 linear or branched alkyl group, a C6-20 cyclohexyl group, and a C6-20 aryl group, in addition to the above-explained reactive functional groups. As the polysilsesquioxane is substituted with a reactive functional group and an unreactive functional group on the surface, in the polysilsesquioxane substituted with one or more reactive functional groups, a siloxane bond (-Si-O-) is formed inside of the molecule and is not exposed outside, and thus compatibility with other organic materials may be further increased, and the siloxane bond is strongly formed between the reactive functional groups or other organic materials and is not separated by external pressure, and thus may function as a strong support inside of the binder resin or coating formed by photocuring of the photocurable coating composition, and thereby the strength or scratch resistance of the finally prepared low refractive layer or anti-reflective film may be significantly increased.

Meanwhile, the polysilsesquioxane may be represented by (RSiO_{1.5})ₙ (wherein n is 4 to 30 or 8 to 20), and may have various structures such as random, ladder, cage, partial cage, etc.

However, in order to increase the properties and qualities of the low refractive layer and anti-reflective film prepared from the photocurable coating composition of the above embodiment, polyhedral oligomeric silsesquioxane that is substituted with one or more reactive functional groups and has a cage structure may be used as the polysilsesquioxane substituted with one or more reactive functional groups.

And, more preferably, the polyhedral oligomeric silsesquioxane that is substituted with one or more reactive functional groups and has a cage structure may include 8 to 20 silicon atoms in the molecule.

Further, in the polyhedral oligomeric silsesquioxane having a cage structure, at least one silicon atom may be substituted with a reactive functional group, and remaining silicon atoms that are not substituted with a reactive functional group may be substituted with unreactive functional groups.

As at least one silicon of the polyhedral oligomeric silsesquioxane having a cage structure is substituted with a reactive functional group, the mechanical properties of the binder resin or coating formed by photocuring of the photocurable coating composition may be improved, and furthermore, as remaining silicons are substituted with unreactive functional groups, molecular structural steric hindrance appears, thus significantly lowering the frequency or probability of a siloxane bond (-Si-O-) being exposed outside, and thus compatibility with other organic materials may be further increased, and the siloxane bond is strongly formed between the reactive functional groups or other organic materials and is not separated by external pressure, and thus may function as a strong support inside of the binder resin or coating formed by photocuring of the photocurable coating composition, and.thereby the strength or scratch resistance of the finally prepared low refractive layer, or anti-reflective film may be significantly increased.

Examples of the polyhedral oligomeric silsesquioxane (POSS) that is substituted with one or more reactive functional groups and has a cage structure may include POSS substituted with one or more alcohols such as TMP diolisobutyl POSS, cyclohexanediol isobutyl POSS, 1,2-propanediollsobutyl POSS, octa(3-hydroxy-3-methylbutyldimethylsiloxy) POSS, etc.; POSS substituted with one or more amines such as aminopropylisobutyl POSS, aminopropylisooctyl POSS, aminoethylaminopropyl isobutyl POSS, N-phenylaminopropyl POSS, N-methylaminopropyl isobutyl POSS, octaammonium POSS, aminophenylcyclohexyl POSS, aminophenylisobutyl POSS, etc.; POSS substituted by one or more carboxylic acids such as maleamic acid-cyclohexyl POSS, maleamic acid-isobutyl POSS, octa maleamic acid POSS, etc.; POSS substituted with one or more epoxides such as epoxycyclohexylisobutyl POSS, epoxycyclohexyl POSS, glycidyl POSS, glycidylethyl POSS, glycidylisobutyl POSS, glycidylisooctyl POSS, etc.; POSS substituted with one or more imides such as POSS maleimide cyclohexyl, POSS maleimide isobutyl, etc.; POSS substituted with one or more (meth)acrylates such as acryloisobutyl POSS, (meth)acrylisobutyl POSS, (meth)acrylate cyclohexyl POSS, (meth)acrylate isobutyl POSS, (meth)acrylate ethyl POSS, (meth)acrylethyl POSS, (meth)acrylate isooctyl POSS, (meth)acrylisooctyl POSS, (meth)acrylphenyl POSS, (meth)acryl POSS, acrylo POSS, etc.; POSS substituted with one or more nitrile groups such as cyanopropylisobutyl POSS, etc.; POSS substituted with one or more norbornene groups such as norbornenylethylethyl POSS, norbomenylethylisobutyl POSS, norbornenylethyl disilanoisobutyl POSS, trisnorbomenyl isobutyl POSS, etc.; POSS substituted with one or more vinyl groups such as allylisobutyl POSS, monovinylisobutyl POSS, octacyclohexenyldimethylsilyl POSS, octavinyldimethylsilyl POSS, octavinyl POSS; etc.; POSS-substituted with one or more olefins such as allylisobutyl POSS; monovinylisobutyl POSS; octacyclohexenyldimethylsilyl POSS, octavinyldimethylsilyl POSS, octavinyl POSS, etc.; POSS substituted with C5-30 PEG; POSS substituted by one or - more thiol groups such as mercaptopropylisobutyl POSS or mercaptopropylisooctyl POSS, etc.; and the like.

Meanwhile, the photopolymerizable compound included in the photocurable coating composition of the embodiment may form a binder resin of the prepared low refractive layer. Specifically, the photopolymerizable compound may include monomers or oligomers including (meth)acrylate or vinyl groups. More specifically, the photopolymerizable compound may include monomers or oligomers including one or more, or two or more, or three or more (meth)acrylate or vinyl groups.

Specific examples of the monomers or oligomers including (meth)acrylate may include pentaerythritol tri(meth)acrylate, pentaerythritol tetra(meth)acrylate, dipentaerythritol penta(meth)acrylate, dipentaerythritol hexa(meth)acrylate, tripentaerythritol hepta(meth)acrylate, thrylene diisocyanate, xylene diisocyanate, hexamethylene diisocyanate, trimethylolpropane tri(meth)acrylate, trimethylolpropane polyethoxy tri(meth)acrylate, trimethylolpropane trimethacrylate, ethylene glycol dimethacrylate, butanediol dimethacrylate, hexaethyl methacrylate, butyl methacrylate, or mixtures of two or more kinds thereof, or urethane modified acrylate oligomers, epoxide acrylate oligomers, etheracrylate oligomers, dendritic acrylate oligomers, or mixtures of two or more kinds thereof. Here, it is preferable that the molecular weight of the oligomer is 1000 to 10,000.

Specific examples of the monomers or oligomers including vinyl groups may include divinylbenzene, styrene, or paramethylstyrene.

Although the content of the photopolymerizable compound in the photocurable coating composition is not significantly limited, considering the mechanical properties of the finally prepared low refractive layer or anti-reflective flim, the - content of the photopolymerizable compound in the photocurable coating composition may be 10 wt% to 80 wt%. The solid content - of the photocurable coating composition means only solid components excluding liquid components, for example, organic solvents, etc. that may be optionally included in the photocurable coating composition as described below.

Meanwhile, the photopolymerizable compound may further include fluorine-based (meth)acrylate-based monomers or oligomers, in addition to the above-explained monomers or oligomers. When the photopolymerizable compound further includes the fluorine-based (meth)acrylate-based monomers or oligomers, the weight ratio of the fluorine-based (meth)acrylate-based monomers or oligomers to the monomer or oligomers including (meth)acrylate or vinyl groups may be 0.1 % to 10 %.

Examples of the fluorine-based (meth)acrylate-based compound may include one or more compounds selected from the group consisting of the following Chemical Formulas 11 to 15.

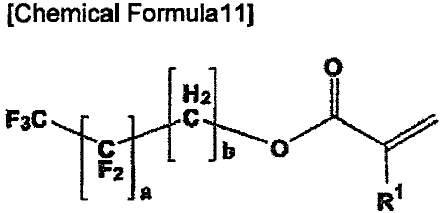

In Chemical Formula 11, R¹ is a hydrogen group or a C1-6 alkyl group, a is an integer of 0 to 7, and b is an integer of 1 to 3.

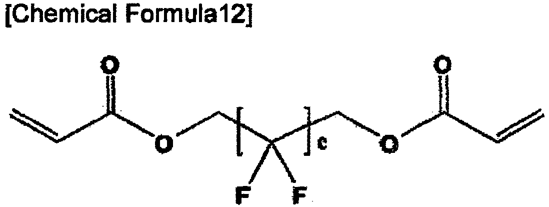

In Chemical Formula 12, c is an integer of 1 to 10.

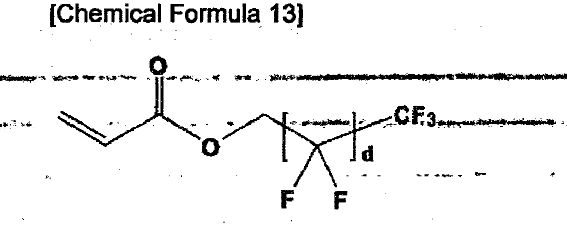

In Chemical Formula 13, d is an integer of 1 to 11.

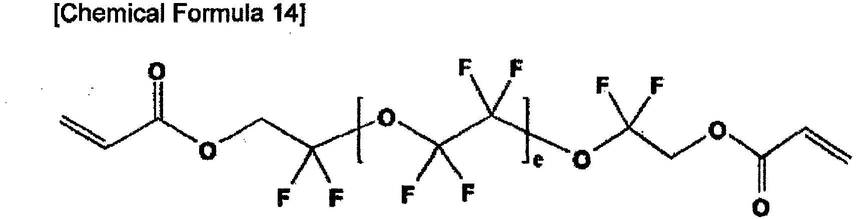

In Chemical Formula 14, e is an integer of 1 to 5.

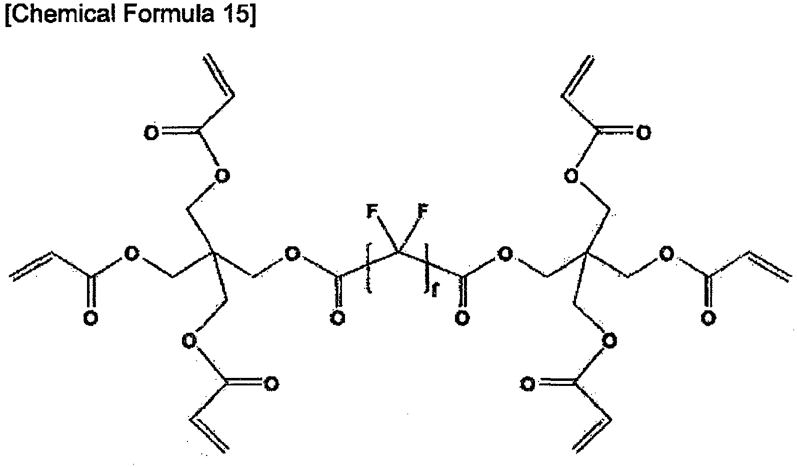

In Chemical Formula 15, f is an integer of 4 to 10.

Meanwhile, the inorganic fine particles mean inorganic particles having a diameter of nanometer or micrometer units.

Specifically, the inorganic fine particles may be hollow silica particles having a number average particle diameter of 10 to 100 nm, nano-silica particles having a number average particle diameter of 1 to 50 nm, or a mixture thereof.

The hollow silica particles mean particles on the surface and/or inside of which an empty space exists. The hollow silica particles have a lower reflective index compared to the particles of which inside are filled, and thus may exhibit an excellent anti-reflective property.

The hollow silica particles may have a number average particle diameter of 10 to 100 nm, preferably 20 to 70 nm, and more preferably 30 to 70 nm, and the shape of the particles may preferably be spherical, but it may be amorphous.

The inorganic fine particles may include hollow silica particles having a number average particle diameter of 10 to 100 nm and nano-silica particles having a number average particle diameter of 1 to 50 nm. On each surface of the hollow silica particles and nano-silica particles, photocurable functional groups may be substituted.

The photocurable functional groups may include one or more selected from the group consisting of alcohol, amine, carboxylic acid, epoxide, imide, (meth)acrylate, nitrile, norbomene, olefin, polyethylene glycol, thiol, and vinyl groups.

And, the hollow silica particles may be included in the composition as a colloid dispersed in a predetermined dispersion medium. The colloid including the hollow silica particles may include an organic solvent as the dispersion medium.

The solid content of the hollow silica particles in the colloid of the hollow silica particles may be determined considering the content range of the hollow silica in the photocurable coating composition of the above embodiment or the viscosity of the photocurable coating composition, etc., and for example, the solid content of the hollow silica particles in the colloid may be 5 wt% to 60 wt%.

Here, as the organic solvent in the dispersion medium, alcohols such as methanol, isopropyl alcohol, ethylene glycol, butanol, etc.; ketones such as methylethylketone, methylisobutylketone, etc.; aromatic hydrocarbons such as toluene, xylene, etc.; amides such as dimethylformamide, dimethylacetamide, N-methylpyrrolidone, etc.; esters such as ethyl acetate, butyl acetate, gamma butyrolactone, etc.; ethers such as tetrahydrofuran, 1,4-dioxane, etc.; or mixtures thereof may be included.

As the inorganic fine particles, nano-silica particles having a number average particle diameter of 1 to 50 nm, or 3 to 30 nm, may be used. The nano-silica particles mean solid silica particles of which insides are filled, contrary to the hollow silica particles.

By using the nano-silica particles, the low refractive layer prepared from the photocurable coating composition of the above embodiment may secure higher mechanical strength and scratch resistance. And, by including the nano-silica particles having a number average particle diameter of 1 to 50 nm, or 3 to 30 nm, in a predetermined content, phase separation of inorganic fine particles, etc. may occur, and thus the reflectance of the low refractive layer may be further lowered.

The photocurable coating composition may include, based on 100 parts by weight of the photopolymerizable compound, 10 to 400 parts by weight, or 20 to 200 parts by weight of the inorganic fine particles. If the inorganic fine particles are added in an excessive amount, the inorganic fine particles may be arranged on the surface of the finally prepared low refractive layer, and surface unevenness may be excessively generated, thus deteriorating the anti-pollution property.

As the photopolymerization initiator, any compounds known to be usable in a photocurable resin composition may be used without significant limitations, and specifically, a benzophenone-based compound, an acetophenone-based compound, a biimidazole-based compound, a triazine-based compound, an oxime-based compound, or mixtures of two or more kinds thereof may be used.

The photopolymerization initiator may be used in the content of 1 to 100 parts by weight, based on 100 parts by weight of the photopolymerizable compound. If the content of the photopolymerization initiator is too small, material that is not cured in the step of photocuring of the photocurable coating composition and remains may be generated. If the content of the photopolymerization initiator is too large, unreacted initiator may remain as impurities or a cross-linking degree may be lowered; and thus the mechanical properties of the prepared film may be deteriorated or reflectance may significantly increase.

The photocurable coating composition may further include an organic solvent.

Non-limiting examples of the organic solvent may include, for example, ketones, alcohols, acetates, ethers, and mixtures of two or more kinds thereof.

Specific examples of the organic solvent may include ketones such as methylethylketone, methylisobutylketone, acetylacetone, or isobutylketone, etc.; alcohols such as methanol, ethanol, n-propanol, i-propanol, n-butanol, i-butanol, or t-butanol, etc.; acetates such as ethyl acetate, i-propyl acetate, or polyethylene glycol monomethylether acetate, etc.; ethers such as tetrahydrofuran or propylene glycol monomethylether, etc.; and mixtures of two or more kinds thereof.

The organic solvent may be added when mixing the components included in the photocurable coating composition, or each component may be added while being dispersed in or mixed in the organic solvent. If the content of the organic solvent in the photocurable coating composition is too small, flowability of the photocurable coating composition may be deteriorated, and thus faults such as stripes, etc. may be generated in the finally prepared film. And, if the organic solvent is excessively added, the solid content may decrease, and thus coating and film formation may not be sufficiently achieved, thus deteriorating the properties or surface property of the film and generating faults in the process of drying and curing. Thus, the photocurable coating composition may include an organic solvent such that the total solid concentration of the included components may become 1 to 50 wt%, or 2 to 20 wt%.

According to another embodiment of the present invention, a low refractive layer including the photocured product of the above-described photocurable coating composition may be provided.

As explained above, a low refractive layer obtained from the photocurable coating composition including two or more kinds of fluorine-containing compounds including photoreactive functional groups may realize low reflectance and high light transmittance, can improve abrasion resistance or scratch resistance, and can simultaneously secure an excellent anti-pollution property against external pollutants.

The low refractive layer prepared from the photocurable coating composition including two or more kinds of fluorine-containing compounds including photoreactive functional groups may have lowered interaction energy with an organic material, and thus the amount of pollutant transcribed to the low refractive layer and anti-reflective film can be significantly reduced, the transcribed pollutant can be prevented from remaining on the surface, and the pollutant itself can be easily removed.

By using two or more kinds of the fluorine-containing compounds including photoreactive functional groups in the photocurable coating composition for forming a low refractive layer, a higher synergistic effect can be obtained compared to the case of using one kind of fluorine-containing compound including a photoreactive functional group, and specifically, more improved surface properties such as anti-pollution and slip property, etc. can be realized while securing higher physical durability and scratch resistance.

Meanwhile, the two or more kinds of fluorine-containing compounds including photoreactive functional groups may be classified according to the fluorine content range, and specifically, the two or more kinds of fluorine-containing compounds including photoreactive functional groups may have different fluorine content ranges according the kind. The actions or effects resulting from the use of the two or more kinds of fluorine-containing compounds including photoreactive functional groups are as explained above with regard to the photocurable coating composition for forming a low refractive layer of the above embodiment.

And, the low refractive layer may include a part derived from polysilsesquioxane substituted with one or more reactive functional groups that may be further included in the photocurable coating composition of the above embodiment,
wherein the polysilsesquioxane substituted with one or more reactive functional groups has reactive functional groups on the surface, and thus may increase the strength of the low refractive layer formed by photocuring of the photocurable coating composition of the above embodiment or an anti-reflective film including the same, and may form cross-links throughout the whole area of the low refractive layer or anti-reflective film, thereby improving surface strength and scratch resistance together.

Further, the polysilsesquioxane substituted with one or more reactive functional groups includes a siloxane bond (-Si-O-) inside of the molecule, wherein the siloxane bond is not exposed outside even in the process of photocuring of the photocurable coating composition of the above embodiment to form a low refractive layer, and thus the siloxane bond is strongly formed between the reactive functional groups or other organic materials and is not separated by external pressure, and thus may function as a strong support inside of the binder resin or coating formed by photocuring of the photocurable coating composition, thereby significantly increasing the strength or scratch resistance of the finally prepared low refractive layer or anti-reflective film.

Specifically, the low refractive layer may include a binder resin including a cross-linked (co)polymer of a photopolymerizable compound and two or more kinds of fluorine-containing compounds including photoreactive functional groups, and inorganic fine particles dispersed in the binder resin.

In addition, as the photocurable coating composition for forming a low refractive layer may further include polysilsesquioxane substituted with one or more reactive functional groups, the binder resin included in the low refractive layer may further include a cross-linked (co)polymer of a photopolymerizable compound, two or more kinds of fluorine-containing compounds including photoreactive functional groups, and polysilsesquioxane substituted with one or more reactive functional groups.

The low refractive layer may be obtained by applying the photocurable coating composition on a predetermined substrate and photocuring the applied product. Specific kinds or thicknesses of the substrate are not particularly limited, and substrates known to be used for the preparation of a low refractive layer or anti-reflective film may be used without specific limitations.

For the application of the photocurable coating composition, commonly used methods and apparatuses may be used without specific limitations, and for example, bar coating such as using a Meyer bar, etc., gravure coating, 2-roll reverse coating, vacuum slot die coating, 2-roll coating, etc. may be used.

The low refractive layer may have a thickness of 1 nm to 300 nm, or 50 nm to 200 nm. Thus, the thickness of the photocurable coating composition applied on the predetermined substrate may be about 1 nm to 300 nm, or 50 nm to 200 nm.

In the step of photocuring the photocurable coating composition, UV or visible light of a 200-400 nm wavelength may be irradiated, wherein the exposure amount may be preferably 100 to 4000 mJ/ cm². The exposure time is not specifically limited, and may be appropriately changed according to the exposure apparatus used, the wavelength of irradiated light rays, or the exposure amount.

In the step of photocuring the photocurable coating composition, nitrogen purging, etc. may be conducted so as to apply a nitrogen atmosphere condition.

The low refractive layer of the one embodiment may have mean reflectance of 1.5 % or less, or 1.0 % or less.

According to another embodiment of the invention, an anti-reflective film including the above-described low refractive layer, and a hard coating layer formed on one side of the low refractive layer, is provided.

The low refractive layer includes all the matters described in the above embodiments.

Meanwhile, as the hard coating layer, commonly known hard coating layers may be used without specific limitations.

One example of the hard coating layer may include a hard coating layer including a binder resin including a photocurable resin and high molecular weight (co)polymer with a weight average molecular weight of 10,000 or more, and organic or inorganic fine particles dispersed in the binder resin.

The high molecular weight (co)polymer may be one or more selected from the group consisting of a cellulose-based polymer, an acryl-based polymer, a styrene-based polymer, an epoxide-based polymer, a nylon-based polymer, a urethane-based polymer, and a polyolefin-based polymer.

The photocurable resin included in the hard coating layer may be a polymer of photocurable compounds capable of inducing a polymerization reaction if light such as UV, etc. is irradiated thereto, as is commonly known in the art. Specifically, the photocurable resin may include one or more selected from the group consisting of: reactive acrylate oligomers such as urethane acrylate oligomers, epoxide acrylate oligomers, polyester acrylates, and polyether acrylates; and multifunctional acrylate monomers such as dipentaerythritol hexaacrylate, dipentaerythritol hydroxy pentaacrylate, pentaerythritol tetraacrylate, pentaerythritol triacrylate, trimethylene propyl triacrylate, propoxylated glycerol triacrylate, trimethylpropane ethoxy triacrylate, 1,5-hexanediol acrylate, propoxylated glycerol triacrylate, tripropylene glycol diacrylate, and ethylene glycol diacrylate.

The organic or inorganic fine particles may have a particle diameter of 1 to 10 µm.

The organic or inorganic fine particles may be organic fine particles selected from the group consisting of an acryl-based resin, a styrene-based resin, an epoxide resin, and a nylon resin, or inorganic fine particles selected from the group consisting of a silicon oxide, a titanium dioxide, an indium oxide, a tin oxide, a zirconium oxide, and a zinc oxide.

The hard coating film may be formed from an anti-glare coating composition including organic or inorganic fine particles, a photocurable resin, a photoinitiator, and a high molecular weight (co)polymer with a weight average molecular weight of 10,000 or more.

Meanwhile, another example of the hard coating film may include a hard coating film including a binder resin of a photocurable resin, and an antistatic agent dispersed in the binder resin.

The photocurable resin included in the hard coating layer may be a polymer of a photocurable compounds capable of inducing a polymerization reaction by the irradiation of light such as UV, etc., as is commonly known in the art. However, preferably, the photocurable compound may be multifunctional (meth)acrylate-based monomers or oligomers, wherein it is advantageous in terms of securing of the properties of the hard coating layer that the number of (meth)acrylate-based functional groups is 2 to 10, preferably 2 to 8, and more preferably 2 to 7. More preferably, the photocurable compound may be one or more selected from the group consisting of pentaerythritol tri(meth)acrylate, pentaerythritol tetra(meth)acrylate, dipentaerythritol penta(meth)acrylate, dipentaerythritol hexa(meth)acrylate, dipentaerythritol hepta(meth)acrylate, tripentaerythritol hepta(meth)acrylate, thrylene diisocyanate, xylene diisocyanate, hexamethylene diisocyanate, trimethylol propane tri(meth)acrylate, and trimethylol propane polyethoxy tri(meth)acrylate.

The antistatic agent may be a quaternary ammonium salt compound, a conductive polymer, or a mixture thereof. Here, the quaternary ammonium salt compound may be a compound having one or more quaternary ammonium salt groups in the molecule, and a low molecular type or a high molecular type may be used without limitations. As the conductive polymer, a low molecular type or a high molecular type may be used without limitations, and it may be one commonly used in the technical field to which the present invention pertains, and thus the kind is not specifically limited.

The hard coating film including a binder resin of a photocurable resin and an antistatic agent dispered in the binder resin may further include one or more compounds selected from the group consisting of alkoxy silane-based oligomers and metal alkoxide-based oligomers

Although the alkoxy silane-based compound may be one commonly used in the art, preferably, it may include one or more compounds selected from the group consisting of tetramethoxysilane, tetraethoxysilane, tetraisopropoxysilane, methyltrimethoxysilane, methyltriethoxysilane, methacryloxypropyltrimethoxysilane, glycidoxy propyl trimethoxy silane, and glycidoxy propyl triethoxy silane.

The metal alkoxide-based oligomer may be prepared by the sol-gel reaction of a composition including a metal alkoxide-based compound and water. The sol-gel reaction may be conducted by a method similar to the above-explained preparation method of an alkoxy silane-based oligomer.

However, since the metal alkoxide-based compound may rapidly react with water, the sol-gel reaction may be conducted by diluting the metal alkoxide-based compound in an organic solvent, and then slowly dripping water thereto. At this time, considering the reaction efficiency, it is preferable that the mole ratio of the metal alkoxide-based compound to water (based on metal ions) is controlled within a range of 3 to 170.

Here, the metal alkoxide-based compound may be one or more compounds selected from the group consisting of titanium tetra-isopropoxide, zirconium isopropoxide, and aluminum isopropoxide.

Meanwhile, the anti-reflective film may further include a substrate bonded to the other side of the hard coating layer. The substrate may be a transparent film having light transmittance of 90 % or more and haze of 1 % or less. The substrate may be made of triacetylcellulose, a cyclo olefin polymer, polyacrylate, polycarbonate, polyethylene terephthalate, etc. The thickness of the substrate film may be 10 to 300 µm considering productivity, etc. However, the present invention is not limited thereto.

### [ADVANTAGEOUS EFFECTS OF THE INVENTION]

According to the present invention, a photocurable coating composition capable of providing a low refractive layer that has both low reflectance and high light transmittance and simultaneously realizes high scratch resistance and a high anti-pollution property, a low refractive layer obtained from the photocurable coating composition, and an anti-reflective film that can increase sharpness of the screen of a display device and yet exhibits excellent mechanical properties, are provided.

### [DETAILED DESCRIPTION OF THE EMBODIMENT]

Embodiments of the invention will be explained in the following examples in more detail. However, these examples are presented only as for illustration of the present invention, and the scope of the invention is not limited thereby.

### <Preparation Example>

### Preparation Example 1: Preparation of a hard coating film (HD1)

### (1) Preparation of a hard coating film (HD1)

A salt type of antistatic hard coating liquid manufactured by KYOEISHA Company (solid content 50 wt%, product name:LJD-1000) was coated on a triacetyl cellulose film with a #10 Meyer bar and dried at 90 °C for 1 minute, and then irradiated by UV at 150 mJ/cm² to prepare a hard coating film (HD1) with a thickness of 5 µm.

### Preparation Example 2 Preparation of a hard coating film (HD2)

30 g of pentaerythritol triacrylate, 2.5 g of a high molecular weight copolymer (BEAMSET 371, Arakawa, Epoxy Acrylate, molecular weight 40,000), 20 g of methylethylketone, and 0.5 g of a leveling agent (Tego Wet 270) were uniformly mixed, and then 2g of acryl-styrene copolymer resin fine particles with a refractive index of 1.525 (volume average particle diameter: 2 µm, manufacturing company: Sekisui Plastics) was added to prepare a hard coating composition. The obtained hard coating composition was coated on a triacetyl cellulose film with #10 Meyer bar and dried at 90 °C for 1 minute. The dried product was irradiated by UV at 150 mJ/cm² to prepare a hard coating film with a thickness of 5 µm.

### <Examples and Comparative Examples: Preparation of an anti-reflective film>

### (1) Preparation of a photocurable coating composition for forming a low refractive layer

The components of the following Tables 1 and 2 were mixed, and diluted in a solvent of MIBK (methyl isobutyl ketone) such that the solid content became 3 wt%.

### (2) Preparation of a low refractive layer and an anti-reflective film (Examples and Comparative Examples)

On the hard coating films described in the following Tables 1 and 2, each photocurable coating composition for forming a low refractive layer obtained in Table 1 was coated with a #3 Meyer bar, and dried at 60 °C for 1 minute. And, under nitrogen purging, the dried coating was irradiated by UV at 180 mJ/cm² to form a low refractive layer with a thickness of 110 nm, thus preparing an anti-reflective film.

**[Table 1]**

| (unit: g) | Example 1 | Example 2 | Example 3 | Example 4 | Example 5 | Example 6 | Example 7 | Example 8 | Example 9 | Example 10 |
|---|---|---|---|---|---|---|---|---|---|---|
| Hard coating layer | HD1 | HD1 | HD2 | HD1 | HD1 | HD2 | HD1 | HD2 | HD1 | HD1 |
| Compositions of photocurable coating compositions for forming low refractive layers | | | | | | | | | | |
| THRULYA4320 | 250 | 250 | 250 | 250 | 250 | 250 | 210 | 210 | 210 | 235 |
| X71-1203M | 75 | | | 75 | 75 | 75 | | | | 125 |
| OPTOOL-AR110 | | 100 | 100 | | | | 120 | 120 | 120 | |
| RS-537 | 7.5 | 7.5 | 7.5 | | 7.5 | 7.5 | 12.5 | 12.5 | 12.5 | 5 |
| TU2323 | | | | 15 | | | | | | |
| MA0701 | | | | | 4 | 4 | | | 5 | |
| MIBK-ST | 33.3 | 33.3 | 33.3 | 33.3 | 33.3 | 33.3 | 50 | 50 | 43.3 | 33.3 |
| Dipentaerythritol pentaacrylate | 18 | 18 | 18 | 18 | 15 | 15 | 16 | 16 | 13 | 13 |
| Irgacure-127 | 4 | 4 | 4 | 4 | 3 | 3 | 4 | 4 | 4 | 3 |

**[Table 2]**

| (unit: g) | Comparative Example 1 | Comparative Example 2 | Comparative Example 3 |
|---|---|---|---|
| Hard coating layer | HD1 | HD1 | HD1 |
| Compositions of photocurable coating compositions for forming low refractive layers | | | |
| THRULYA 4320 | 210 | 250 | 250 |
| X71-1203M | | | |
| OPTOOL-AR110 | 120 | | |
| RS-537 | | 7.5 | |
| TU2323 | | | 15 |
| MA0701 | | | |
| MIBK-ST | 50 | 33.3 | 33.3 |
| Dipentaerythritol pentaacrylate | 21 | 33 | 33 |
| Irgacure-127 | 4 | 4 | 4 |

| | | | |
|---|---|---|---|
| 1) THRULYA 4320 (manufactured by Catalysts and Chemicals Co., Ltd.): a hollow silica dispersion (solid content 20 wt% in an MIBK solvent) 2) X71-1203M (manufactured by Shinetsu): a fluorine-containing compound including a photoreactive functional group (diluted to a solid content of 15 wt% in MIBK solvent, fluorine content of about 45 wt% in the solid content) 3) OPTOOL-AR110 (manufactured by Daikin): a fluorine-containing compound including a photoreactive functional group (diluted to a solid content of 15 wt% in MIBK solvent, fluorine content of about 60 wt% in the solid content) 4) RS537(manufactured by DIC Composition): a fluorine-containing compound including a photoreactive functional_group (diluted to a solid content of 40 wt% in MIBK solvent, fluorine content of about 15 wt% in the solid content) 5) TU2323 (manufactured by JSR): a fluorine-containing compound including a photoreactive functional group (diluted to a solid content of 20 wt% in MIBK solvent, fluorine content of about 21 wt% in the solid content) 4) MA0701: polysilsesquioxane (manufactured by Hybrid Plastics) 5) MIBK-ST (manufactured by Nissan Chemical Industries, Ltd.): nano-silica dispersion, diluted to a solid content of 30 % in MIBK solvent | | | |

### <Experimental Example: Measurement of the properties of anti-reflective films>

For the anti-reflective films obtained in the examples and comparative examples, the following experiments were conducted.

### 1. Measurement of mean reflectance

One side of the above-prepared anti-reflective film was darkened, and then, using Solidspec 3700 (SHIMADZU), mean reflectances in a wavelength region of 480 nm to 780 nm were measured while applying a measuring mode when HD1 was used as a hard coating film, and a 100%T mode when HD2 was used as a hard coating film.

### 2. Measurement of scratch resistance

While steel wool was loaded and allowed to go back and forth 10 times at 27 reciprocations per minute, the surfaces of the anti-reflective films obtained in the examples and comparative examples were rubbed. The maximum load under which a scratch of 1 cm or less is observed with the unaided eye was measured.

### 3. Evaluation of anti-pollution property

On the surface of the anti-reflective films obtained in the examples and comparative examples, straight lines were drawn with a black oil-based pen and rubbed with a clean wiper, and the rubbing times at which the lines were erased were confirmed to measure anti-pollution properties.
0: erased at 10 or less rubbing times
Δ: erased at 11 to 20 rubbing times
X: erased at 21 or more rubbing times, or not erased

**[Table 3]**

| | Reflectance (%) | Scratch resistance | Anti-pollution property |
|---|---|---|---|
| Example 1 | 0.64 | 400 g | ○ |
| Example 2 | 0.62 | 400 g | ○ |
| Example 3 | 0.64 | 400 g | ○ |
| Example 4 | 0.63 | 400 g | ○ |
| Example 5 | 0.63 | 450 g | ○ |
| Example 6 | 0.65 | 450 g | ○ |
| Example 7 | 0.7 | 450 g | ○ |
| Example 8 | 0.7 | 450 g | ○ |
| Example 9 | 0.69 | 500 g | ○ |
| Example 10 | 0.54 | 350 g | ○ |
| Comparative Example 1 | 0.8 | 300 g | Δ |
| Comparative Example 2 | 1 | 150 g | X |
| Comparative Example 3 | 1 | 150 g | X |

As shown in the Table 3, it was confirmed that the anti-reflective films of Examples 1 to 10 have low reflectances of 0.7 % or less and relatively excellent scratch resistance, and simultaneously have an excellent anti-pollution property.

To the contrary, it was confirmed that the anti-reflective films of Comparative Examples 1 to 3 have high reflectance and relatively inferior scratch resistance, and could not secure a sufficient anti-pollution property.

## Claims

1. A photocurable coating composition for forming a low refractive layer, comprising:
a photopolymerizable compound; inorganic fine particles; two or more kinds of fluorine-containing compounds comprising photoreactive functional groups; and a photopolymerization initiator,
wherein the two or more kinds of fluorine-containing compounds comprising photoreactive functional groups have different fluorine contents according to the kind ,
wherein the two or more kinds of fluorine-containing compounds comprising photoreactive functional groups comprise
a first fluorine-containing compound comprising a photoreactive functional group and comprising 25 to 60 wt% of fluorine, and
a second fluorine-containing compound comprising a photoreactive functional group and comprising fluorine in the content of 1 wt% or more and less than 25 wt%,
wherein a fluorine-containing compound means a compound including at least one fluorine atom in the compound.

2. The photocurable coating compositon for forming a low refractive layer according to claim 1,
wherein a difference in the fluorine content between the first fluorine-containing compound and the second fluorine-containing compound is 5 wt% or more.

3. The photocurable coating composition for forming a low refractive layer according to claim 1,
wherein a weight ratio of the second fluorine-containing compound to the first fluorine-containing compound is 0.01 to 0.5.

4. The photocurable coating composition for forming a low refractive layer according to claim 1,
wherein each of the fluorine-containing compounds comprising photoreactive functional groups has a weight average molecular weight of 2000 to 200,000.

5. The photocurable coating composition for forming a low refractive layer according to claim 1,
wherein the photocurable coating composition further comprises polysilsesquioxane substituted with one or more reactive functional groups.

6. The photocurable coating composition for forming a low refractive layer according to claim 5,
wherein the photocurable coating composition comprises 0.5 to 60 parts by weight of the polysilsesquioxane substituted with one or more reactive functional groups, based on 100 parts by weight of the photopolymerizable compound.

7. The photocurable coating composition for forming a low refractive layer according to claim 6.
wherein the polysilsesquioxane substituted whit one more reactive functional groups is further substituted with one or more unreactive functional groups selected from the group consisting of a C1-20 linear or branched alkyl group, a C6-20 cyclohexyl group, and a C6-20 aryl group.

8. The photocurable coating composition for forming a low refractive layer according to claim 1,
wherein the inorganic fine particles comprise hollow silica particles having a number average particle diameter of 10 to 100 nm and nano-silica particles having a number average particle diameter of 1 to 50 nm, and
on each surface of the hollow silica particles and the nano-silica particles, photocurable functional groups are substituted.

9. The photocurable coating composition for forming a low refractive layer according to claim 1,
wherein the photocurable coating composition comprises 10 to 400 parts by weight of the inorganic fine particles, based on 100 parts by weight of the photopolymerizable compound.

10. A low refractive layer comprising the photocured product of the photocurable coating composition of claim 1.

11. The low refractive layer according to claim 10,
wherein the low refractive layer comprises: a binder resin comprising a cross-linked (co)polymer of a photopolymerizable compound and two or more kinds of fluorine-containing compounds comprising photoreactive functional groups; and inorganic fine particles dispersed in the binder resin.

12. The low refractive layer according to claim 11,
wherein the binder resin further comprises a cross-linked (co)polymer of a photopolymerizable compound, two or more kinds of on fluorine-containing compounds comprising photoreactive functional groups, and polysilsesquioxane substituted with one or more reactive functional groups.

13. An anti-reflective film comprising the low refractive layer of claim 10, and a hard coating layer formed on one side of the low refractive layer.

## Patentansprüche

1. Photohärtbare Beschichtungszusammensetzung zum Bilden einer Schicht mit geringer Brechung, umfassend:
eine photopolymerisierbare Verbindung; anorganische Feinteilchen; zwei oder mehr Arten von Fluor-enthaltenden Verbindungen umfassend photoreaktive funktionelle Gruppen; und einen Photopolymerisationsinitiator,
wobei die zwei oder mehr Arten von Fluor-enthaltenden Verbindungen umfassend photoreaktive funktionelle Gruppen unterschiedliche Fluorgehalte gemäß ihrer Art aufweisen,
wobei die zwei oder mehr Arten von Fluor-enthaltenden Verbindungen umfassend photoreaktive funktionelle Gruppen
eine erste Fluor-enthaltende Verbindung umfassend eine photoreaktive funktionelle Gruppe und umfassend 25 bis 60 Gew.-% Fluor, und
eine zweite Fluor-enthaltende Verbindung umfassend eine photoreaktive funktionelle Gruppe und umfassend Fluor im Gehalt von 1 Gew.-% oder mehr und weniger als 25 Gew.-% umfassen,
wobei eine Fluor-enthaltende Verbindung eine Verbindung bedeutet, die wenigstens ein Fluoratom in der Verbindung einschließt.

2. Photohärtbare Beschichtungszusammensetzung zum Bilden einer Schicht mit geringer Brechung nach Anspruch 1, wobei ein Unterschied im Fluorgehalt zwischen der ersten Fluor-enthaltenden Verbindung und der zweiten Fluor-enthaltenden Verbindung 5 Gew.-% oder mehr ist.

3. Photohärtbare Beschichtungszusammensetzung zum Bilden einer Schicht mit geringer Brechung nach Anspruch 1, wobei ein Gewichtsverhältnis der zweiten Fluor-enthaltenden Verbindung zu der ersten Fluor-enthaltenden Verbindung 0,01 bis 0,5 ist.

4. Photohärtbare Beschichtungszusammensetzung zum Bilden einer Schicht mit geringer Brechung nach Anspruch 1, wobei jede der Fluor-enthaltenden Verbindungen umfassend photoreaktive funktionelle Gruppen ein Gewichtsmittelmolekulargewicht von 2000 bis 200.000 aufweist.

5. Photohärtbare Beschichtungszusammensetzung zum Bilden einer Schicht mit geringer Brechung nach Anspruch 1, wobei die photohärtbare Beschichtungsschicht ferner Polysilsesquioxan, substituiert mit einer oder mehreren reaktiven funktionellen Gruppen, umfasst.

6. Photohärtbare Beschichtungszusammensetzung zum Bilden einer Schicht mit geringer Brechung nach Anspruch 5, wobei die photohärtbare Beschichtungszusammensetzung 0,5 bis 60 Gewichtsteile des Polysilsesquioxans, substituiert mit einer oder mehreren reaktiven funktionellen Gruppen, basierend auf 100 Gewichtsteilen der photopolymerisierbaren Verbindung, umfasst.

7. Photohärtbare Beschichtungszusammensetzung zum Bilden einer Schicht mit geringer Brechung nach Anspruch 6, wobei das Polysilsesquioxan, substituiert mit einer oder mehreren reaktiven funktionellen Gruppen, ferner substituiert ist mit einer oder mehreren nicht reaktiven funktionellen Gruppen, ausgewählt aus der Gruppe bestehend aus einer linearen oder verzweigten C1-20-Alkylgruppe, einer C6-20-Cyclohexylgruppe und einer C6-20-Arylgruppe.

8. Photohärtbare Beschichtungszusammensetzung zum Bilden einer Schicht mit geringer Brechung nach Anspruch 1, wobei die anorganischen Feinteilchen hohle Silicateilchen mit einem Zahlenmittelteilchendurchmesser von 10 bis 100 nm und Nano-Silicateilchen mit einem Zahlenmittelteilchendurchmesser von 1 bis 50 nm umfassen, und wobei auf jeder Oberfläche der hohlen Silicateilchen und der Nano-Silicateilchen photohärtbare funktionelle Gruppen substituiert sind.

9. Photohärtbare Beschichtungszusammensetzung zum Bilden einer Schicht mit geringer Brechung nach Anspruch 1, wobei die photohärtbare Beschichtungszusammensetzung 10 bis 400 Gewichtsteile der anorganischen Feinteilchen, basierend auf 100 Gewichtsteilen der photopolymerisierbaren Verbindung, umfasst.

10. Schicht mit geringer Brechung, umfassend das photogehärtete Produkt der photohärtbaren Beschichtungszusammensetzung nach Anspruch 1.

11. Schicht mit geringer Brechung nach Anspruch 10, wobei die Schicht mit geringer Brechung umfasst: ein Bindemittelharz umfassend ein vernetztes (Co)polymer einer photopolymerisierbaren Verbindung und zwei oder mehr Arten von Fluor-enthaltenden Verbindungen umfassend photoreaktive funktionelle Gruppen; und anorganische Feinteilchen, die in dem Bindemittelharz dispergiert sind.

12. Schicht mit geringer Brechung nach Anspruch 11, wobei das Bindemittelharz ferner ein vernetztes (Co)polymer einer photopolymerisierbaren Verbindung, zwei oder mehr Arten von Fluor-enthaltenden Verbindungen umfassend photoreaktive funktionelle Gruppen, und Polysilsesquioxan, substituiert mit einer oder mehreren reaktiven funktionellen Gruppen, umfasst.

13. Antireflexionsfilm, umfassend die Schicht mit geringer Brechung nach Anspruch 10, und eine Hartbeschichtungsschicht, die auf einer Seite der Schicht mit geringer Brechung gebildet ist.

## Revendications

1. Composition de revêtement photodurcissable pour la formation d'une couche à indice de réfraction faible, comprenant ;
un composé photopolymérisable ; des particules inorganiques fines ; deux ou plusieurs types de composés contenant du fluor comprenant des groupements fonctionnels photoréactifs ; et un initiateur de photopolymérisation,
où les deux ou plusieurs types de composés contenant du fluor comprenant des groupements fonctionnels photoréactifs ont des teneurs en fluor qui diffèrent en fonction du type,
où les deux ou plusieurs types de composés contenant du fluor comprenant des groupements fonctionnels photoréactifs comprennent
un premier composé contenant du fluor comprenant un groupement fonctionnel photoréactif et comprenant de 25 à 60 % en poids de fluor et
un deuxième composé contenant du fluor comprenant un groupement fonctionnel photoréactif et comprenant du fluor à une teneur égale ou supérieure à 1 % en poids et inférieure à 25 % en poids,
où « composé contenant du fluor » fait référence à un composé qui inclut au moins un atome de fluor dans le composé.

2. Composition de revêtement photodurcissable pour la formation d'une couche à indice de réfraction faible selon la revendication 1,
où une différence en termes de teneur en fluor entre le premier composé contenant du fluor et le deuxième composé contenant du fluor est de 5 % en poids ou plus.

3. Composition de revêtement photodurcissable pour la formation d'une couche à indice de réfraction faible selon la revendication 1,
où un rapport en poids entre le deuxième composé contenant du fluor et le premier composé contenant du fluor va de 0,01 à 0,5.

4. Composition de revêtement photodurcissable pour la formation d'une couche à indice de réfraction faible selon la revendication 1,
où chacun des composés contenant du fluor comprenant des groupements fonctionnels photoréactifs a une masse moléculaire moyenne en poids qui va de 2 000 à 200 000.

5. Composition de revêtement photodurcissable pour la formation d'une couche à indice de réfraction faible selon la revendication 1,
où la composition de revêtement photodurcissable comprend en outre un polysilsesquioxane substitué par un ou plusieurs groupements fonctionnels réactifs.

6. Composition de revêtement photodurcissable pour la formation d'une couche à indice de réfraction faible selon la revendication 5,
où la composition de revêtement photodurcissable comprend de 0,5 à 60 parties en poids du polysilsesquioxane substitué par un ou plusieurs groupements fonctionnels réactifs pour 100 parties en poids du composé photopolymérisable.

7. Composition de revêtement photodurcissable pour la formation d'une couche à indice de réfraction faible selon la revendication 6,
où le polysilsesquioxane substitué par un ou plusieurs groupements fonctionnels réactifs est en outre substitué par un ou plusieurs groupements fonctionnels non réactifs sélectionnés dans le groupe consistant en un groupement alkyle en C1-20 linéaire ou ramifié, un groupement cyclohexyle en C6-20 et un groupement aryle en C6-20.

8. Composition de revêtement photodurcissable pour la formation d'une couche à indice de réfraction faible selon la revendication 1,
où les particules inorganiques fines comprennent des particules de silice creuses ayant un diamètre moyen des particules en nombre qui va de 10 à 100 nm et des particules de nano-silice ayant un diamètre moyen des particules en nombre qui va de 1 à 50 nm et
des groupements fonctionnels photodurcissables sont substitués sur chaque surface des particules de silice creuses et des particules de nano-silice.

9. Composition de revêtement photodurcissable pour la formation d'une couche à indice de réfraction faible selon la revendication 1,
où la composition de revêtement photodurcissable comprend de 10 à 400 parties en poids de particules inorganiques fines pour 100 parties en poids du composé photopolymérisable.

10. Couche à indice de réfraction faible comprenant le produit photodurci de la composition de revêtement photodurcissable de la revendication 1.

11. Couche à indice de réfraction faible selon la revendication 10,
où la couche à indice de réfraction faible comprend : une résine liante comprenant un (co)polymère réticulé d'un composé photopolymérisable et de deux ou plusieurs types de composés contenant du fluor comprenant des groupements fonctionnels photoréactifs ; et des particules inorganiques fines dispersées dans la résine liante.

12. Couche à indice de réfraction faible selon la revendication 11,
où la résine liante comprend en outre un (co)polymère réticulé d'un composé photopolymérisable, de deux ou plusieurs types de composés contenant du fluor comprenant des groupements fonctionnels photoréactifs et d'un polysilsesquioxane substitué par deux ou plusieurs groupements fonctionnels réactifs.

13. Film anti-reflet comprenant la couche à indice de réfraction faible de la revendication 10 et une couche de revêtement dure formée sur une face de la couche à indice de réfraction faible.
